# EUROPÄISCHE PATENTSCHRIFT

(11) **EP 2 709 489 B1**
(45) Veröffentlichungstag und Bekanntmachung des Hinweises auf die Patenterteilung: **08.07.2015**
(21) Anmeldenummer: 12727213.6
(22) Anmeldetag: 11.05.2012
(51) Int. Cl.: A47B 88/04, F16D 43/20

(54) **SYNCHRONISATIONSVORRICHTUNG FÜR EIN BEWEGBAR GELAGERTES MÖBELTEIL**
SYNCHRONIZING DEVICE FOR A MOVABLY MOUNTED FURNITURE PART
DISPOSITIF DE SYNCHRONISATION POUR UN ÉLÉMENT DE MEUBLE MONTÉ MOBILE

(30) Priorität: 20.05.2011 AT 7282011
(43) Veröffentlichungstag der Anmeldung: 26.03.2014
(73) Patentinhaber: Julius Blum GmbH, 6973 Höchst (AT)
(72) Erfinder: BOHLE, Wolfgang, A-6840 Goetzis (AT)
(74) Vertreter: Gangl, Markus
(86) Internationale Anmeldenummer: PCT/AT2012/000131
(87) Internationale Veröffentlichungsnummer: WO 2012/159136

(56) Entgegenhaltungen:
- EP-A1- 2 248 442
- DE-U1-202004 016 393

## Beschreibung

Die Erfindung betrifft eine Synchronisationsvorrichtung für ein bewegbar gelagertes Möbelteil, wobei die Synchronisationsvorrichtung über eine Synchronisationsstange eine Bewegung zwischen wenigstens zwei Stellvorrichtungen synchronisiert.

Weiters betrifft die Erfindung eine Kupplung für eine Überlastsicherungsvorrichtung, mit einer drehmomentübertragenden Welle, wobei die Überlastsicherungsvorrichtung zwischen zwei Teilwellen der Welle angeordnet ist.

Im Weiteren betrifft die Erfindung ein bewegbar gelagertes Möbelteil mit einer Synchronisationsvorrichtung und/oder einer Kupplung wie eben genannt. Ebenfalls betrifft die Erfindung ein Möbel mit einem bewegbar gelagerten Möbelteil wie erwähnt.

Synchronisationsvorrichtungen für bewegbar gelagerte Möbelteile sind bereits in einer Vielzahl aus dem Stand der Technik heraus bekannt. Im Wesentlichen gibt es dazu drei verschiedene Anwendungsgebiete bei beweglich gelagerten Möbelteilen:
- die Synchronisierung von Schubladenausziehführungen von einer Schublade
- die Synchronisierung der Stellantriebe einer Möbelklappe
- die Synchronisierung von ver- und entriegelbaren Ausstoßvorrichtungen von bewegbar gelagerten Möbelteilen.

So zeigt etwa die EP 1 036 526 B1 vom 24. August 2005 eine Schublade mit einer Vorrichtung zur Stabilisierung des Laufverhaltens der Schublade, wobei die Schublade in einem Möbelkorpus verfahrbar ist und Schubladenzargen aufweist, wobei an beiden Seiten der Schublade je ein Zahnrad vorgesehen ist, das jeweils mit einer korpusseitigen Zahnstange kämmt und die beiden Zahnräder, die drehfest miteinander verbunden sind, in Lagerkörpern lagern.

Die EP 1 875 026 B1 vom 13. Oktober 2010 zeigt ein schrankförmiges Möbel mit Seitenwänden, an denen jeweils eine Stellvorrichtung mit zumindest einem schwenkbar gelagerten Stellarm zum Bewegen einer Klappe angeordnet ist, wobei die Stellvorrichtungen durch eine Synchronisationsstange zur synchronen Bewegung derselben verbunden sind.

Die WO 2010/129971 A1 vom 18. November 2010 zeigt eine Anordnung zum Verriegeln und Ausstoßen eines bewegbaren Möbelteils mit zwei beidseitig an einem Möbelkorpus oder am bewegbaren Möbelteil angeordneten, entriegelbaren Ausstoßvorrichtungen, wobei die entriegelbaren Ausstoßvorrichtungen über eine drehbare Synchronisationsstange bewegungsgekoppelt sind.

Aufgabe der Erfindung ist es, eine gegenüber dem Stand der Technik verbesserte Synchronisationsvorrichtung für ein bewegbar gelagertes Möbelteil anzugeben.

Diese Aufgabe wird mit den Merkmalen des Anspruches 1 gelöst.

Durch die Verwendung einer Überlastsicherungsvorrichtung, die bei Überschreiten eines vorbestimmten Haltedrehmoments zwischen den beiden Teilwellen der Synchronisationsvorrichtung eine relative Drehbewegung zwischen den beiden Teilwellen freigegeben wird, wird eine Beschädigung des bewegbar gelagerten Möbelteils verhinderbar.

Weitere vorteilhafte Ausführungsformen der Erfindung sind in den abhängigen Ansprüchen definiert.

Als besonders vorteilhaft hat es sich herausgestellt, wenn die Überlastsicherungsvorrichtung wenigstens ein radial oder axial federbelastetes Rastteil aufweist, das in wenigstens eine der beiden Teilwellen - vorzugsweise in beide Teilwellen - eingreift und in wenigstens eine der beiden Teilwellen - vorzugsweise in beide Teilwellen - einrastet. Durch die Verwendung eines federbelasteten Rastteiles kann auf einfache Art und Weise eine Verbindung zwischen der Überlastsicherungsvorrichtung und den Teilwellen erzielt werden.

Gemäß einem bevorzugten Ausführungsbeispiel kann vorgesehen sein, dass die beiden Teilwellen ineinander stecken und das federbelastete Rastteil der Überlastsicherungsvorrichtung radial zu den beiden Teilwellen ausgebildet ist, wobei das federbelastete Rastteil die eine Teilwelle durchdringt und in der anderen Teilwelle einrastet. Durch zwei ineinander steckenden Teilwellen kann der federbelastete Rastteil beide Teilwellen miteinander verbinden.

Weiters kann bevorzugt vorgesehen sein, dass die Überlastsicherungsvorrichtung als federnde Manschette ausgebildet ist und wenigstens eine radial nach innen gerichtete Rastnase aufweist, die in wenigstens eine der beiden Teilwellen - vorzugsweise in beide Teilwellen - einrastet. Eine als federnde Manschette ausgebildete Überlastsicherungsvorrichtung kann die beiden Teilwellen umgreifen und durch die radial nach innen gerichtete Rastnase ortsfest in die Teilwellen einrasten.

Als besonders vorteilhaft hat es sich erwiesen, wenn die Überlastsicherungsvorrichtung einstückig ausgebildet ist und/oder dass die Überlastsicherungsvorrichtung aus Kunststoff ausgebildet ist und/oder dass die Überlastsicherungsvorrichtung werkzeuglos montierbar und/oder werkzeuglos demontierbar ist. Dies kann dazu beitragen, dass kurze Montagezeiten erzielt werden können.

Schutz wird auch begehrt für eine Kupplung für eine Überlastsicherungsvorrichtung, insbesondere für eine Synchronisationsvorrichtung nach wenigstens einer der beschriebenen Ausführungsformen, mit einer drehmomentübertragenden Welle, wobei die Überlastsicherungsvorrichtung zwischen zwei Teilwellen der Welle angeordnet ist.

Als besonders vorteilhaft hat es sich dabei herausgestellt, wenn der Rastteil der federnden Manschette als Rastnase ausgebildet ist und die Gegenrast als eine Ausnehmung - vorzugsweise als ein Sackloch - ausgebildet ist.

Gemäß einem bevorzugten Ausführungsbeispiel kann vorgesehen sein, dass der ausgerastete Rastteil der federnden Manschette selbsttätig in die Gegenrast der anderen Teilwelle wieder einrastet. Somit ist kein Zutun von außen notwendig - wie etwa durch den Bediener -, um die Verbindung über die Kupplung wieder herzustellen.

Schutz wird auch begehrt für ein bewegbar gelagertes Möbelteil mit einer Synchronisationsvorrichtung und/oder einer Kupplung nach wenigstens einer der beschriebenen Ausführungsformen.

Konkret wird auch Schutz begehrt für ein Möbel mit einem bewegbar gelagerten Möbelteil mit einer Synchronisationsvorrichtung und/oder einer Kupplung nach wenigstens einer der beschriebenen Ausführungsformen.

Weitere Einzelheiten und Vorteile der vorliegenden Erfindung werden anhand der Figurenbeschreibung unter Bezugnahme auf die in den Zeichnungen dargestellten Ausführungsbeispiele im Folgenden näher erläutert.

Darin zeigen:
- Fig. 1a: eine perspektivische Rückansicht eines Möbels mit einer Schublade,
- Fig. 1b: eine perspektivische Schnittansicht eines Möbels mit einer Klappe,
- Fig. 1c: eine perspektivische Rückansicht eines Möbels mit Schubladen mit einer Ausstoßvorrichtung,
- Fig. 2: eine Unteransicht eines Möbels mit einer Schublade mit einer Synchronisationsvorrichtung für die Schubladenausziehführungen,
- Fig. 3: eine perspektivische Rückansicht einer Schubladenausziehführung und daran angeordneter Synchronisationsvorrichtung,
- Fig. 4: eine perspektivische Explosionsdarstellung der Synchronisationsvorrichtung mit Überlastsicherungsvorrichtung bzw. Kupplung,
- Fig. 5a: einen Schnitt durch zwei Teilwellen mit Überlastsicherungsvorrichtung bzw. Kupplung,
- Fig. 5b: einen Schnitt durch zwei Teilwellen mit aktivierter Überlastsicherungsvorrichtung,
- Fig. 6a: einen perspektivischen, axialen Schnitt durch zwei Teilwellen mit Überlastsicherungsvorrichtung,
- Fig. 6b: einen Schnitt durch zwei Teilwellen mit aktivierter Überlastsicherungsvorrichtung,
- Fig. 7a: eine perspektivische Darstellung zweier Teilwellen mit Überlastsicherungsvorrichtung bzw. Kupplung,
- Fig. 7b: eine perspektivische Darstellung zweier Teilwellen mit aktivierter Überlastsicherungsvorrichtung,
- Fig. 8a bis Fig. 11b: schematische Darstellungen unterschiedlicher Überlastsicherungsvorrichtungen bzw. Kupplungen an zwei Teilwellen und deren Schnitte dazu,
- Fig. 12: eine schematische Darstellung eines Motors und zweier Teilwellen mit dazwischen angeordneter Kupplung,
- Fig. 13: eine perspektivische Explosionsdarstellung einer Überlastsicherungsvorrichtung mit einer Federstahlmanschette.

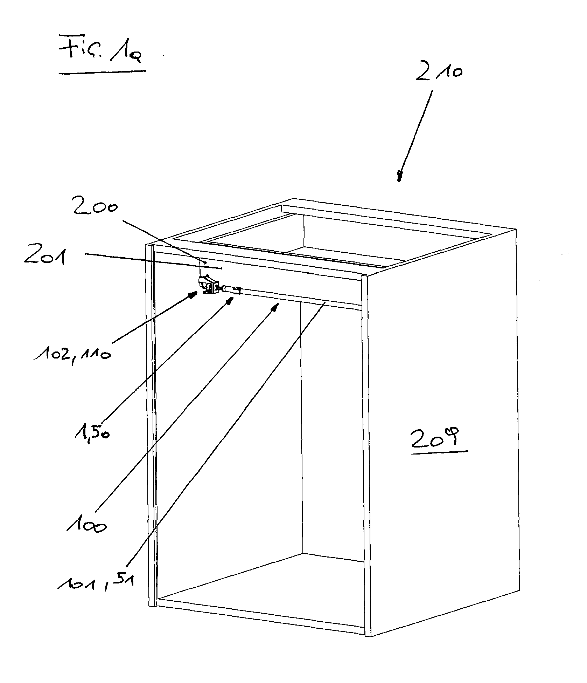

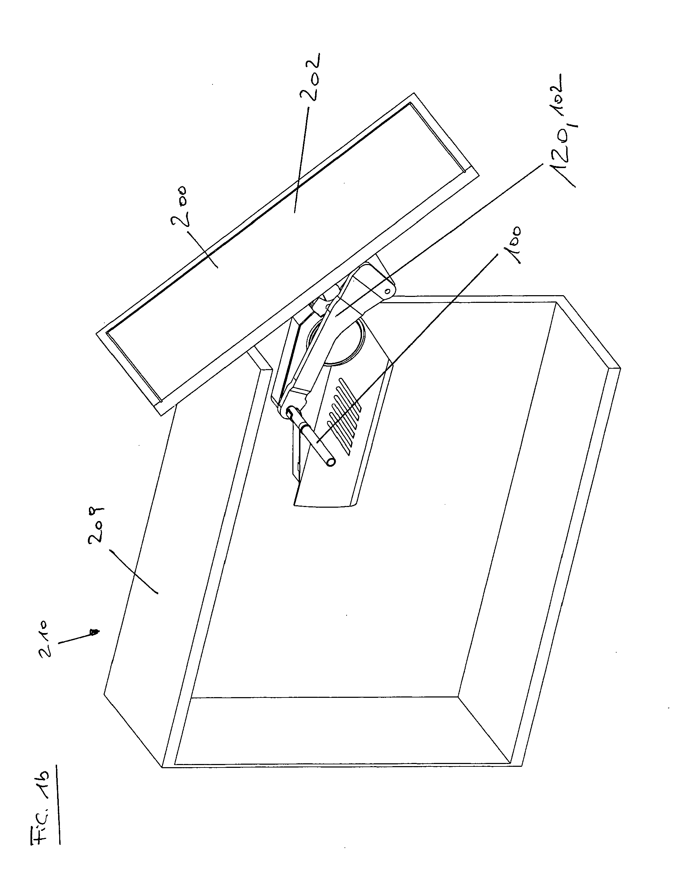

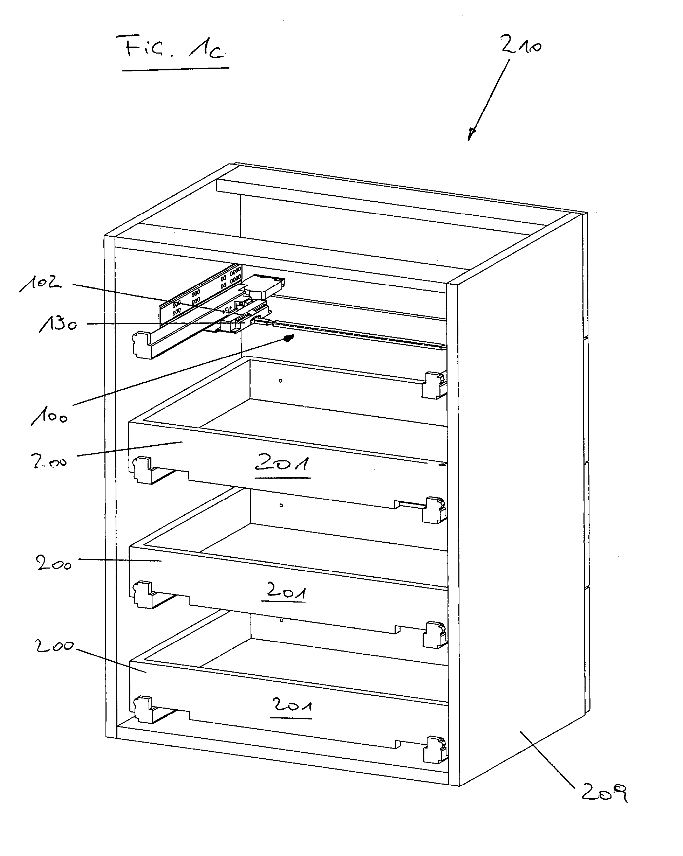

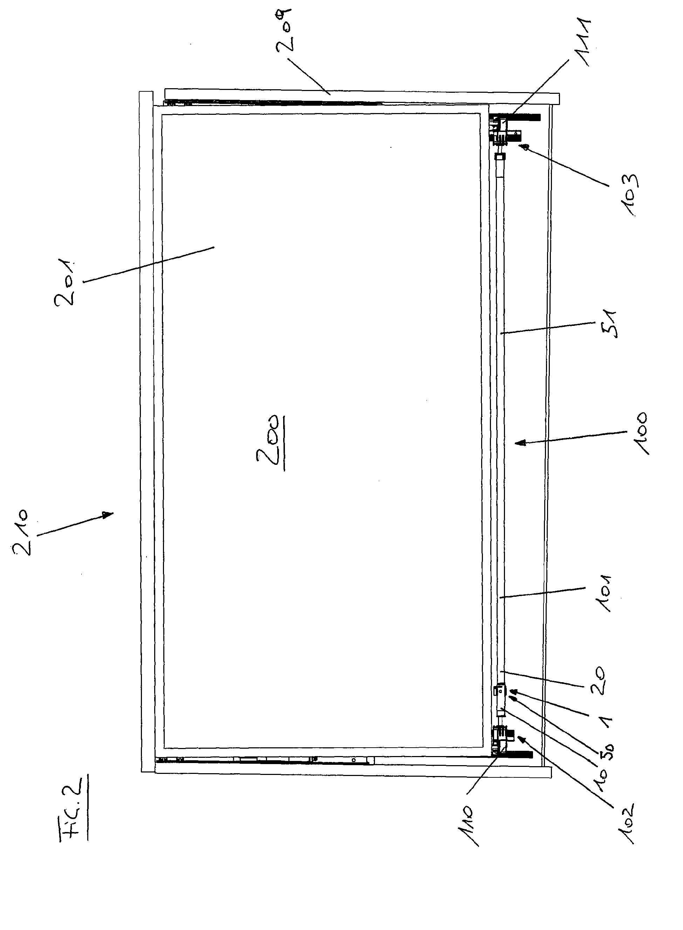

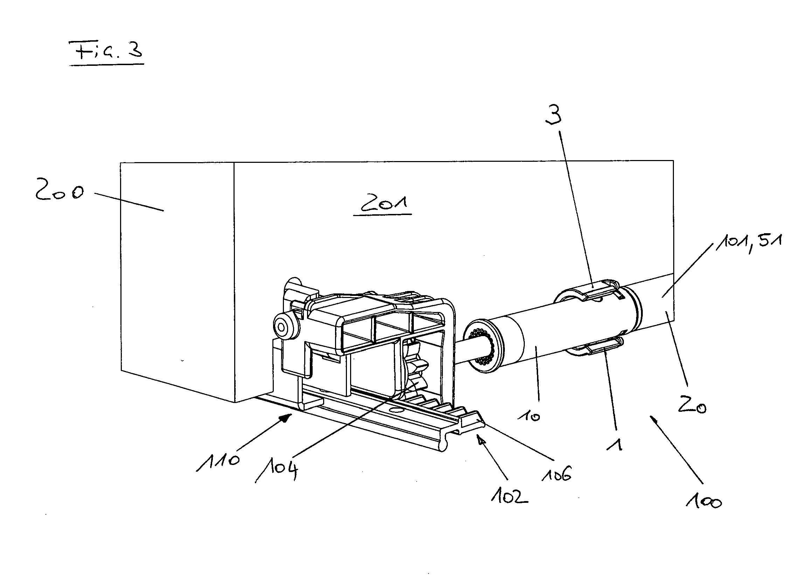

Figur 1 a zeigt eine perspektivische Ansicht eines Möbels 210 mit darin angeordnetem, bewegbar gelagert Möbelteil 200, welcher in diesem Ausführungsbeispiel als Schublade 201 ausgebildet ist. Die Schublade 201 ist dabei im Möbelkorpus 209 beweglich gelagert. Über die Synchronisationsvorrichtung 100 werden die Stellvorrichtungen 102 und 103 (103 nicht dargestellt, siehe dazu Figur 2) synchronisiert, welche in diesem Ausführungsbeispiel als Schubladenausziehführungen 110 und 111 (111 nicht dargestellt, siehe dazu Figur 2) ausgebildet sind. An der Synchronisationsvorrichtung 100 ist dabei die Überlastsicherungsvorrichtung 1 vorgesehen. Die Überlastsicherungsvorrichtung 1 ist dabei an der drehmomentübertragenden Welle 51 ausgebildet, die in diesem Ausführungsbeispiel als Synchronisationsstange 101 wirkt. Die Überlastsicherungsvorrichtung 1 bzw. die Kupplung 50 wirkt dabei zwischen den beiden hier nicht dargestellten Teilwellen der Welle 51 (Teilwellen siehe Figur 3).

Figur 1b zeigt ein Möbel 210 mit einer Möbelklappe 202. Die Möbelklappe 202 wird über zwei Stellvorrichtungen 102 und 103 (103 nicht dargestellt), welche in diesem Ausführungsbeispiel als Stellantriebe 120 für die Möbelklappe 202 ausgebildet sind, bewegt. Die beiden Stellantriebe 120 (nur einer dargestellt) sind über die Synchronisationsvorrichtung 100 miteinander verbunden und werden über diese synchronisiert, weiters weist die Synchronisationsvorrichtung 100 eine hier nicht dargestellte Überlastsicherungsvorrichtung 1 auf, die bei Überschreiten eines vorbestimmten Haltedrehmoments eine relative Drehbewegung zwischen den beiden Stellvorrichtungen 102 und 103 freigibt und somit eine Beschädigung der Stellantriebe 120 verhindern kann.

Figur 1c zeigt ein Möbel 210 mit einem Möbelkorpus 209, mit mehreren bewegbar gelagerten Möbelteilen 200 - in diesem Ausführungsbeispiel als Schubladen 201 ausgebildet. Die Stellvorrichtungen 102 und 103 (103 nicht dargestellt) sind in diesem Ausführungsbeispiel als ver- und entriegelbare Ausstoßvorrichtungen 130 für das bewegbar gelagerte Möbelteil 200 ausgebildet. Die Synchronisationsvorrichtung 100 wirkt zwischen den ver- und entriegelbaren Ausstoßvorrichtungen 130. Weiters weist die Synchronisationsvorrichtung 100 eine hier nicht dargestellte Überlastsicherungsvorrichtung 1 auf.

Figur 2 zeigt eine Unteransicht eines Möbels 210. Das Möbel 210 weist ein bewegbar gelagertes Möbelteil 200 auf, welches in diesem Ausführungsbeispiel als Schublade 201 ausgebildet ist. An der Schubladenrückseite befindet sich die Synchronisationsvorrichtung 100 für das bewegbar gelagerte Möbelteil 200, wobei die Synchronisationsvorrichtung 100 über die Synchronisationsstange 101 eine Bewegung zwischen den beiden Stellvorrichtungen 102 und 103 synchronisiert, wobei die Synchronisationsstange 101 zwei Teilwellen 10 und 20 aufweist, zwischen denen eine Überlastsicherungsvorrichtung 1 angeordnet ist, die bei Überschreiten eines vorbestimmten Haltedrehmoments zwischen den beiden Teilwellen 10 und 20 eine relative Drehbewegung zwischen den beiden Teilwellen 10 und 20 freigibt.

Links und auch rechts weist die Synchronisationsvorrichtung 100 jeweils ein Zahnrad 104 auf (nicht dargestellt, siehe Figur 3). Die Zahnräder 104 greifen jeweils links und rechts in die Zahnstangen 106 ein (ebenfalls nicht dargestellt, siehe Figur 3).

Die Synchronisationsvorrichtung 100 dient dazu, dass die Stellvorrichtungen 102 und 103 - bei dieser Schublade 201 als Schubladenausziehführungen 110 und 111 ausgeführt - synchronisiert werden. Durch eine etwaige Fehlbedienung eines Benutzers - wie in dieser Abbildung dargestellt - kann es vorkommen, dass sich die Schublade 201 schräg zum Möbelkorpus 209 stellt (etwa durch einseitige Belastung der Schublade 201).

Würde in weiterer Folge die Schublade 201 auch auf ihrer noch nicht in der Endstellung befindlichen Position in den Möbelkorpus 209 weiter hineingedrückt werden, so könnte es zu einer Beschädigung der Synchronisationsvorrichtung 100 kommen. Aus diesem Grund weist die Synchronisationsvorrichtung 100 die Überlastsicherungsvorrichtung 1 auf, welche bei Überschreiten eines vorbestimmten Haltedrehmoments zwischen den beiden Teilwellen 10 und 20 der Welle 51 bzw. der Synchronisationsstange 101 eine relative Drehbewegung zwischen den beiden Teilwellen 10 und 20 freigibt.

In diesem bevorzugten Ausführungsbeispiel weist die Überlastsicherungsvorrichtung 1 eine Kupplung 50 auf, welche als Manschette 3 (nicht dargestellt, siehe dazu Figuren 3 bis 7) ausgebildet ist.

Figur 3 zeigt eine perspektivische Rückansicht eines Details einer Schublade 201. Die Schublade 201 ist über die Schubladenausziehführung 110 verfahrbar. Aus Synchronisationsgründen zwischen der linken und der rechten Schubladenausziehführung 110 und 111 (nicht dargestellt) ist die Synchronisationsvorrichtung 100 vorgesehen, welche in diesem bevorzugten Ausführungsbeispiel mit einer manschettenförmigen Überlastsicherungsvorrichtung 1 versehen ist.

Die Funktionsweise der Überlastsicherungsvorrichtung 1 wird in den folgenden Figurenbeschreibungen näher erläutert.

Die Synchronisationsvorrichtung 100 treibt in diesem Ausführungsbeispiel ein Zahnrad 104 an, auf der gegenüberliegenden Seite der Welle 51 bzw. der Synchronisationsstange 101 ebenfalls ein nicht dargestelltes weiteres Zahnrad. Diese beiden Zahnräder 104 greifen in die Zahnstangen 106 ein und verfahren in diesen. Die Zahnräder 104 ergeben zusammen mit den Zahnstangen 106 die Stellvorrichtungen 102 und 103 (nicht dargestellt, siehe Figur 2).

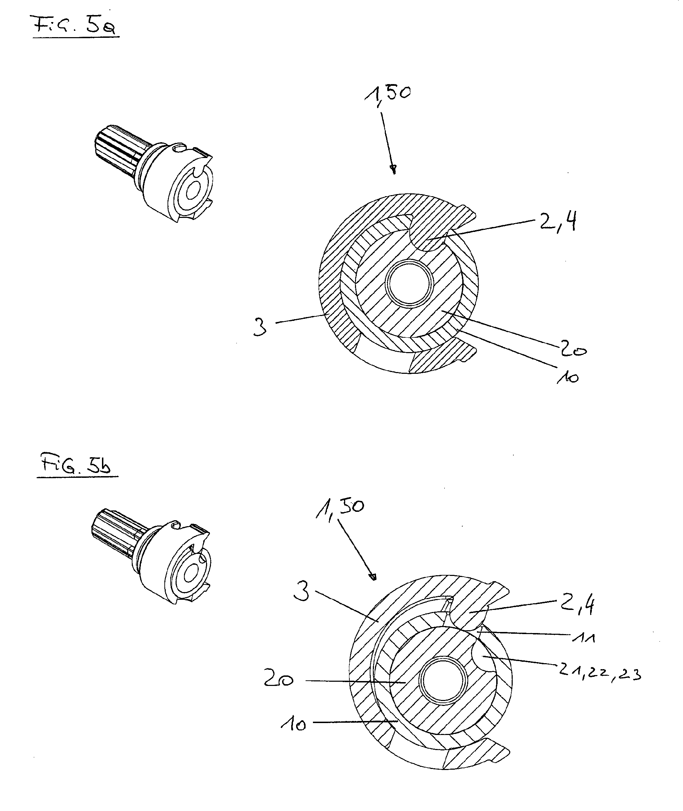

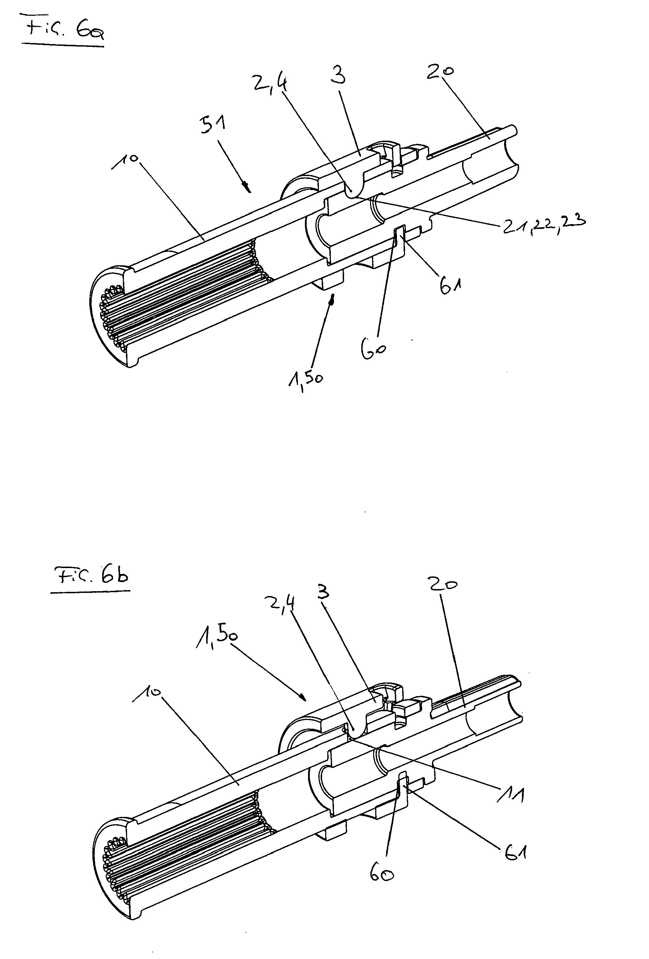

Die beiden Teilwellen 10 und 20 der Synchronisationsstange 101 bzw. der Welle 51 sind in diesem bevorzugen Ausführungsbeispiel ineinander gesteckt und werden von der Kupplung 3 bzw. einem Rastteil der Kupplung 3 radial durchdrungen bzw. in die innere Teilwelle 20 eingedrungen (siehe dazu Figuren 5a und 6a).

Eine hier dargestellte Synchronisationsvorrichtung 100 ist natürlich nicht nur für eine Schublade 201 vorstellbar, sondern ebenso für jedes andere bewegbar gelagerte Möbelteil 200, wie etwa die hier nicht dargestellten Stellantriebe einer Möbelklappe 202 oder ebenfalls für eine hier nicht dargestellte ver- und entriegelbare Ausstoßvorrichtung für bewegbar gelagerte Möbelteile 200 (siehe dazu Figuren 1a bis 1c und deren Beschreibung).

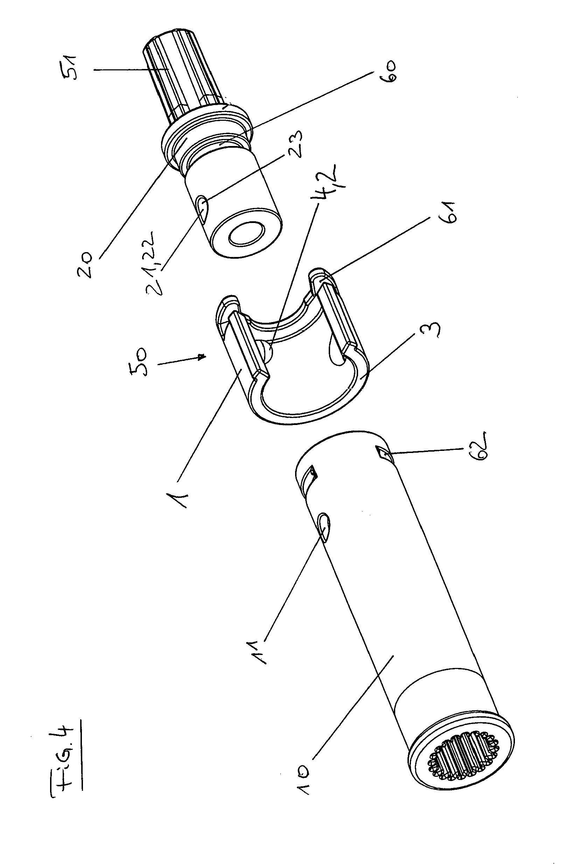

Figur 4 zeigt eine perspektivische Explosionsdarstellung der beiden Teilwellen 10 und 20 und der Überlastsicherungsvorrichtung 1, bzw. der Kupplung 50.

Die Überlastsicherungsvorrichtung 1 weist dabei die Kupplung 50 auf, die wiederum als federnde Manschette 3 ausgebildet ist. Die federnde Manschette 3 weist den federbelasteten Rastteil 2 auf, der in diesem bevorzugten Ausführungsbeispiel als Rastnase 4 ausgebildet ist, die radial nach innen gerichtet ist. Diese radial nach innen gerichtete Rastenase 4 durchgreift die Öffnung 11 der Teilwelle 10 und dringt anschließend in die Gegenrast 21 der Teilwelle 20 ein und verweilt in dieser bis zum Überschreiten eines vorgegebenen Drehmoments. Die Gegenrast 21 ist in diesem bevorzugten Ausführungsbeispiel als eine Ausnehmung 22, genau genommen als ein Sackloch 23, ausgebildet. Die genaue Funktionsweise wird in den Figuren 5a und 5b näher erläutert. Die Überlastsicherungsvorrichtung 1 weist hier weiters noch einen radial nach innen gerichteten Steg 61 auf, welcher den Durchbruch 62 der Teilwelle 10 durchdringt und in der radial ausgebildeten Nut 60 der Teilwelle 20 verweilt. Dadurch wird die Position der Teilwelle 20 zur Teilwelle 10 bestimmt, sowohl bei nichtaktivierter Überlastsicherungsvorrichtung 1 als auch bei aktivierter. Dadurch bleiben die beiden Teilwellen 10 und 20 miteinander verbunden, selbst wenn die Kupplung 50 sich öffnet, da nur der federnde Rastteil 2 der Kupplung 50 aus der Teilwelle 20 ausrastet, nicht hingegen der Steg 61 (siehe dazu Figur 5b).

Die Figuren 5a und Figur 5b zeigen zwei Schnittdarstellungen durch die beiden Teilwellen 10 und 20 und der Überlastsicherungsvorrichtung 1, die in diesem bevorzugten Ausführungsbeispiel die Kupplung 50 aufweist.

Die beiden Teilwellen 10 und 20 sind in diesem Ausführungsbeispiel ineinander gesteckt, d.h., dass sich die Teilwelle 20 teilweise im Inneren der Teilwelle 10 befindet. Die als Manschette 3 ausgebildete Kupplung 50 umgreift die Teilwelle 10 und durchdringt die Teilwelle 10 durch die Öffnung 11, genau genommen durchdringt der Rastteil 2, welcher als Rastnase 4 ausgebildet ist, diese Öffnung 11 der Teilwelle 10.

Wenn die Kupplung der beiden Teilwellen 10 und 20 hergestellt ist, so lagert die Rastnase 4 in der Gegenrast 21 der Teilwelle 20.

Wird ein vorgegebenes Drehmoment zwischen den beiden Teilwellen 10 und 20 überschritten, so rastet die Rastnase 4 aus der Gegenrast 21, welche als Sackloch 23 ausgebildet ist, aus und die Teilwelle 20 kann sich gegenüber der Teilwelle 10 verdrehen. Während dieses Verdrehens verweilt die Rastnase 4 in der Öffnung 11 der Teilwelle 10 und "wartet" darauf, dass sich die beiden Teilwellen 10 und 20 wieder gegeneinander ausrichten, woraufhin die Rastnase 4 wiederum in das Sackloch 23 vollkommen selbsttätig einrastet. Damit sich während des "ausgerasteten" Zustandes der Kupplung 50 aus dem Sackloch 23 der Teilwelle 20 die beiden Teilwelle 10 und 20 nicht voneinander lösen können, weist die Synchronisationsvorrichtung zusätzlich eine Haltevorrichtung auf, die die beiden Teilwellen 10 und 20 zusammenhält (siehe dazu Figuren 6a und 6b). Diese Haltevorrichtung ist in diesem bevorzugten Ausführungsbeispiel an der Kupplung 50 bzw. der Überlastsicherungsvorrichtung 1 ausgebildet - zumindest teilweise.

Figur 6a und Figur 6b zeigen einen perspektivischen Schnitt durch die die beiden Teilwellen 10 und 20 und der Überlastsicherungsvorrichtung 1 bzw. der Kupplung 50 in verrastetem Zustand (Figur 6a) und in entrastetem Zustand (Figur 6b). Bezüglich der Funktion der Überlastsicherungsvorrichtung 1 bzw. der Kupplung 50 gilt das eben bezüglich der Figur 5a und Figur 5b erwähnte.

In diesen Figuren 6a und 6b ist gut die Haltevorrichtung erkennbar, welche durch die radial verlaufende Nut 60 der Teilwelle 20, den Steg 61 der Überlastsicherungsvorrichtung 1 und den Durchbruch 62 (nicht dargestellt, siehe Figur 4) der Teilwelle 10 gebildet wird. Selbst bei aktivierter Überlastsicherungsvorrichtung 1 bzw. gelöster Kupplung 50 (Figur 6b) verweilt der Steg 61 in der Nut 60 der Teilwelle 20, wodurch sich die Teilwelle 20 gegenüber der Teilwelle 10 zwar drehen kann, diese jedoch nicht voneinander gelöst werden können.

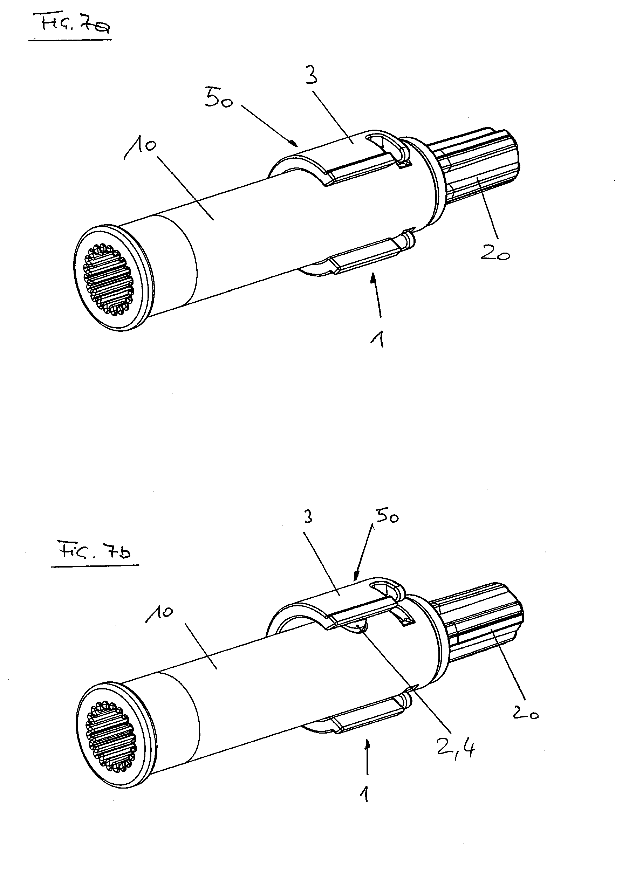

Figur 7a und Figur 7b zeigen eine perspektivische Darstellung der beiden Teilwellen 10 und 20 mit der Überlastsicherungsvorrichtung 1, die hier als Kupplung 50 ausgebildet ist.

In Figur 7a ist die Kupplung 50 eingerastet, in Figur 7b ist die Kupplung 50 ausgerastet, d.h., dass der Rastteil 2, genau genommen die Rastnase 4, sich nicht mehr in der nicht dargestellten Gegenrast 21 befindet und somit die beiden Teilwellen 10 und 20 gegeneinander verdreht werden können, was bei einer Überschreitung eines vorgegebenen Drehmoments automatisch vonstatten geht. Ebenso automatisch bzw. selbsttätig rastet die Rastnase 4 wieder in die Teilwelle 20 ein, wenn sich diese mit ihrer Gegenrast 21 wiederum bei der Rastnase 4 befindet.

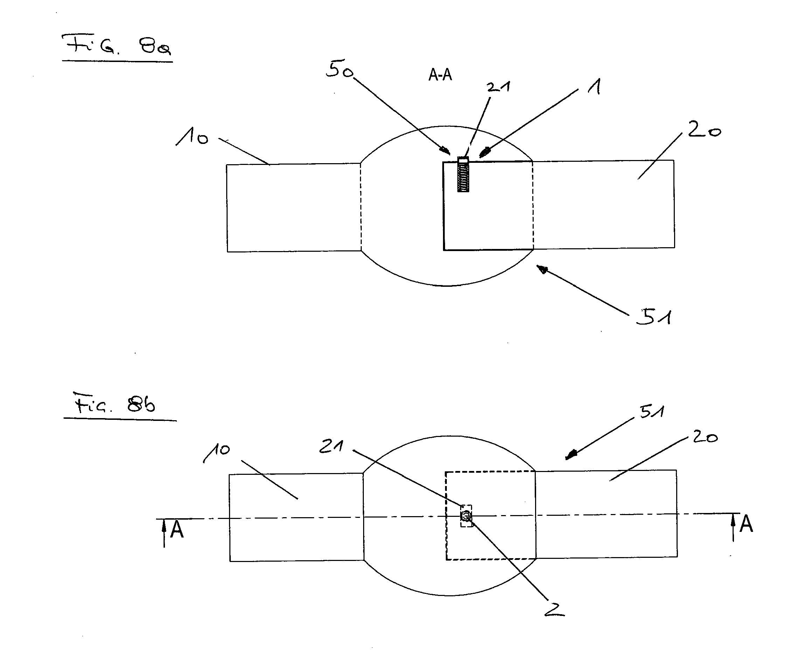

In den Figuren 8a bis 11b sind verschiedene Ausführungsvarianten einer Überlastsicherungsvorrichtung 1 bzw. einer Kupplung 50 für eine drehmomentübertragende Welle 51 und deren beiden Teilwellen 10 und 20 dargestellt und werden nun näher erläutert:
Die Figuren 8a und 8b zeigen die beiden Teilwellen 10 und 20 der drehmomentübertragenden Welle 51, wobei in der Teilwelle 20 der federbelastete Rastteil 2 ausgebildet ist, welcher in eine Gegenrast 21 der Teilwelle 10 einrastet.

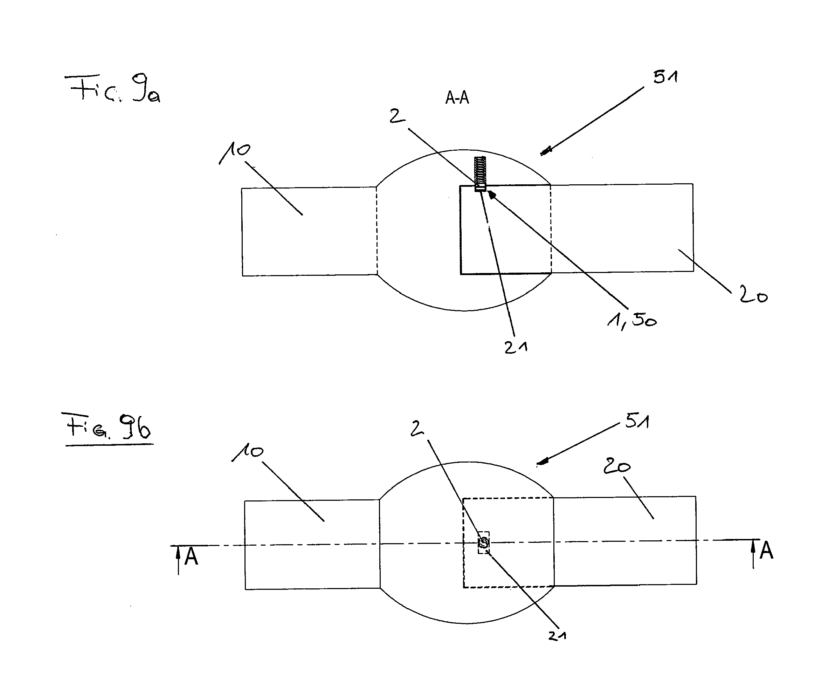

In Figur 9a und Figur 9b ist der federbelastete Rastteil 2 in der Teilwelle 10 ausgebildet und rastet dabei federbelastet in die Gegenrast 21 der Teilwelle 20 ein.

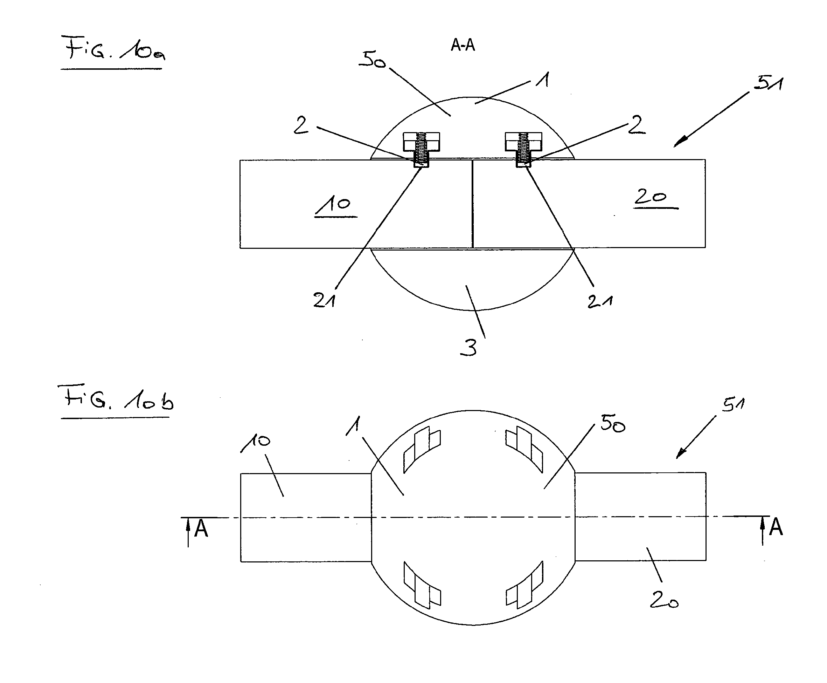

In den Figuren 10a und 10b sind die beiden Teilwellen 10 und 20 nicht ineinander gesteckt, sondern stehen an ihren Stirnseiten aneinander an. Die beiden federbelasteten Rastteile 2 sind in diesem Ausführungsbeispiel in der Kupplung 50 ausgebildet und ragen in die Gegenrasten 21 der beiden Teilwellen 10 und 20 hinein.

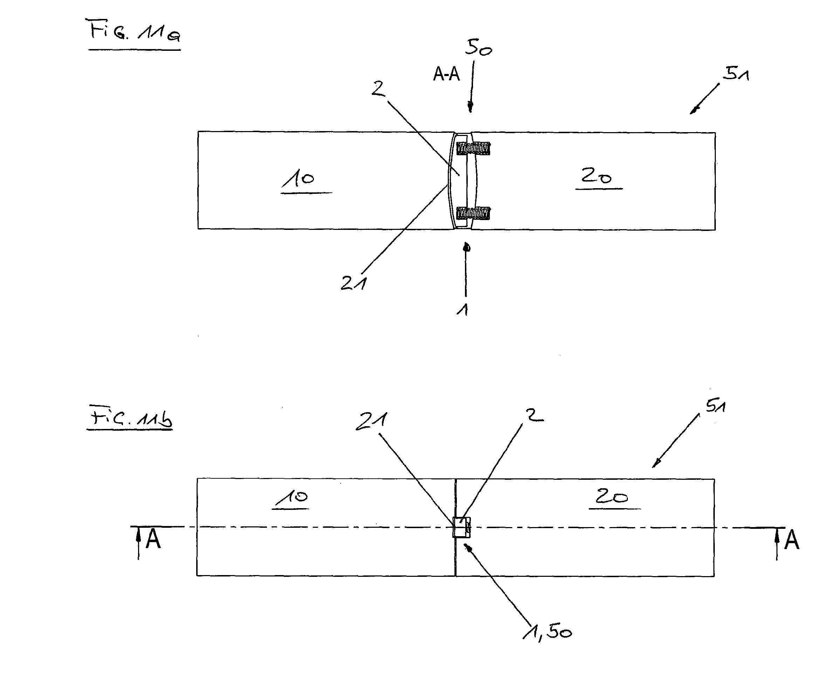

In den Figuren 11a und 11b ist die Überlastsicherungsvorrichtung 1 axial zu den beiden Teilwellen 10 und 20 ausgebildet, wobei der federbelastete Rastteil 2 von der einen Teilwelle 20 in die Gegenrast 21 der anderen Teilwelle 10 einrastet.

Es versteht sich von selbst, dass sowohl der federbelastete Rastteil 2 als auch die Gegenrast 21 ebenso jeweils auf der anderen Teilwelle 10 bzw. 20 ausgebildet sein können. Dies gilt natürlich ebenso für alle anderen angeführten Ausführungsbeispiele.

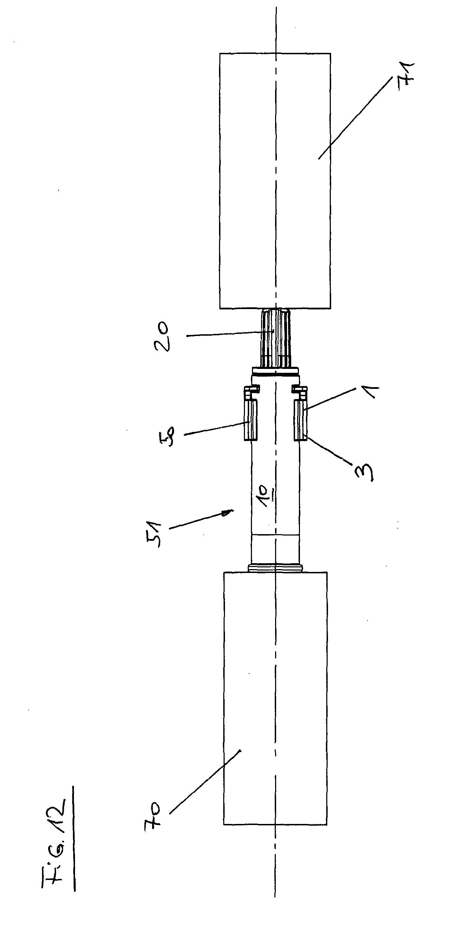

Figur 12 zeigt eine schematische Darstellung eines Antriebes 70, welcher eine drehmomentübertragende Welle 51 antreibt. In weiterer Folge überträgt die drehmomentübertragende Welle 51 ein Drehmoment auf den Abtrieb 71.

Die Welle 51 weist dabei die beiden Teilwellen 10 und 20 auf, zwischen diesen beiden Teilwellen 10 und 20 ist die Kupplung 50 als eine Überlastsicherungsvorrichtung 1 ausgebildet, wobei die Kupplung 50 eine federnde Manschette 3 aufweist, die an einer der beiden Teilwellen 10 bzw. 20 gelagert ist und welche einen Rastteil 2 (nicht dargestellt, siehe Figur 5a) trägt, der in eine Gegenrast 21 (nicht dargestellt, siehe Figur 5b) der anderen Teilwelle 10 bzw. 20 einrastet und bei Überschreiten eines vorbestimmten Haltedrehmoments automatisch ausrastet und eine relative Drehbewegung zwischen den beiden Teilwellen 10 und 20 frei gibt.

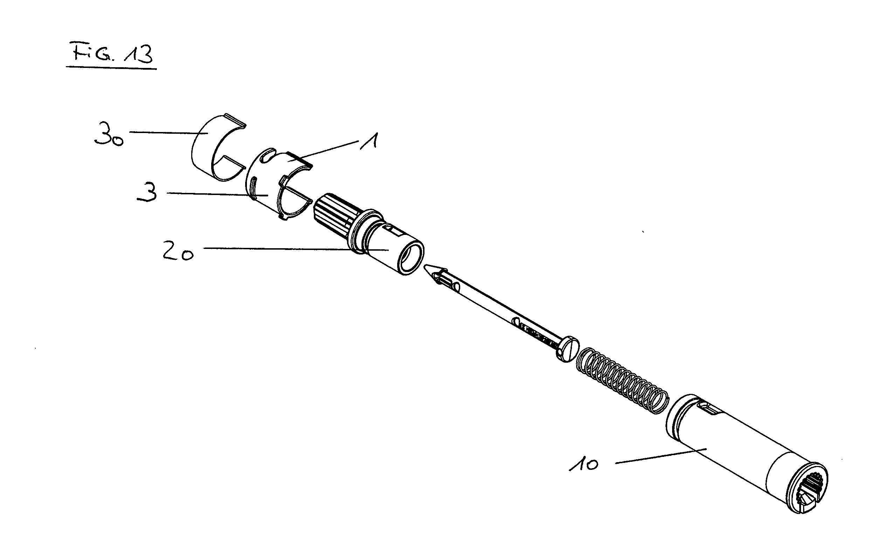

Figur 13 zeigt eine perspektivische Explosionsdarstellung der beiden Teilwellen 10 und 20 mit einer Überlastsicherungsvorrichtung 1, welche in diesem bevorzugten Ausführungsbeispiel als Manschette 3 ausgebildet ist bzw. eine solche aufweist. In einem bevorzugten Ausführungsbeispiel ist diese Manschette 3 aus Kunststoff ausgebildet und weiters einstückig. Dadurch wird ein rasches Montieren ermöglicht. Das Montieren selbst kann dabei vollkommen werkzeuglos erfolgen, da die Manschette 3 einfach nur aufgeklipst werden muss.

Um die Stabilität dieser Kunststoffmanschette 3 zu erhöhen, kann in diesem bevorzugten Ausführungsbeispiel zusätzlich eine Federstahlmanschette 30 vorgesehen sein, welche ebenfalls bevorzugterweise über die Manschette 3 geklippst wird.

## Patentansprüche

1. Synchronisationsvorrichtung (100) für ein bewegbar gelagertes Möbelteil (200), wobei die Synchronisationsvorrichtung (100) über eine Synchronisationsstange (101) eine Bewegung zwischen wenigstens zwei Stellvorrichtungen (102, 103) synchronisiert, **dadurch gekennzeichnet, dass** die Synchronisationsstange (101) mindestens zwei Teilwellen (10, 20) aufweist, zwischen denen eine Überlastsicherungsvorrichtung (1) angeordnet ist, die (1) bei Überschreiten eines vorbestimmten Haltedrehmoments zwischen den beiden Teilwellen (10, 20) eine relative Drehbewegung zwischen den beiden Teilwellen (10, 20) freigibt.

2. Synchronisationsvorrichtung nach Anspruch 1, **dadurch gekennzeichnet, dass** die Stellvorrichtungen (102, 103) als Schubladenausziehführungen (110, 111) einer Schublade (201) oder als Stellantriebe (120) einer Möbelklappe (202) oder als ver- und entriegelbare Ausstoßvorrichtung (130) für das bewegbar gelagerte Möbelteil (200) ausgebildet sind.

3. Synchronisationsvorrichtung nach Anspruch 1 oder 2, **dadurch gekennzeichnet, dass** die Synchronisationsvorrichtung (100) links und rechts jeweils wenigstens ein Zahnrad (104) antreibt.

4. Synchronisationsvorrichtung nach Anspruch 3, **dadurch gekennzeichnet, dass** die Synchronisationsvorrichtung (100) links und rechts Zahnstangen (106) aufweist, in die (106) die Zahnräder (104) eingreifen.

5. Synchronisationsvorrichtung nach einem der Ansprüche 1 bis 4, **dadurch gekennzeichnet, dass** die Überlastsicherungsvorrichtung (1) axial oder radial zwischen den beiden Teilwellen (10, 20) ausgebildet ist.

6. Synchronisationsvorrichtung nach einem der Ansprüche 1 bis 5, **dadurch gekennzeichnet, dass** die Überlastsicherungsvorrichtung (1) wenigstens ein radial oder axial federbelastetes Rastteil (2) aufweist, das in wenigstens eine der beiden Teilwellen (10, 20) - vorzugsweise in beide Teilwellen (10, 20)-eingreift und in wenigstens eine der beiden Teilwellen (10, 20) - vorzugsweise in beide Teilwellen (10, 20) - einrastet.

7. Synchronisationsvorrichtung nach einem der Ansprüche 1 bis 6, **dadurch gekennzeichnet, dass** eine Federstahlmanschette (30) vorgesehen ist, die (30) die Überlastsicherungsvorrichtung (1) umgreift.

8. Kupplung (50) für eine Überlastsicherungsvorrichtung (1), insbesondere für eine Synchronisationsvorrichtung (100) nach einem der Ansprüche 1 bis 7, mit einer drehmomentübertragenden Welle (51), wobei die Überlastsicherungsvorrichtung (1) zwischen zwei Teilwellen (10, 20) der Welle (51) angeordnet ist, **dadurch gekennzeichnet, dass** an einer Teilwelle (10, 20) eine federnde Manschette (3) gelagert ist, die (3) einen Rastteil (2) trägt, der in eine Gegenrast (21) der anderen Teilwelle (10, 20) einrastet und bei Überschreiten eines vorbestimmten Haltedrehmoments automatisch ausrastet und eine relative Drehbewegung zwischen den beiden Teilwellen (10, 20) freigibt.

9. Kupplung (50) nach Anspruch 8, **dadurch gekennzeichnet, dass** die beiden Teilwellen (10, 20) ineinander stecken und der Rastteil (2) der federnden Manschette (3) eine Öffnung (11) der einen Teilwelle (10) durchdringt und in die Gegenrast (21) der anderen Teilwelle (20) einrastet.

10. Kupplung nach Anspruch 8 oder 9, **dadurch gekennzeichnet, dass** der ausgerastete Rastteil (2) der federnden Manschette (3) selbsttätig in die Gegenrast (21) der anderen Teilwelle (20) wieder einrastet.

11. Kupplung nach einem der Ansprüche 8 bis 10, **dadurch gekennzeichnet, dass** der ausgerastete Rastteil (2) der federnden Manschette (3) während seines (2) ausgerasteten Zustandes in der Öffnung (11) der einen Teilweile (10) verteilt und selbsttätig in die Gegenrast (21) der anderen Teilwelle (20) wieder einrastet.

12. Kupplung nach einem der Ansprüche 8 bis 11, **dadurch gekennzeichnet, dass** die Kupplung (50) einstückig ausgebildet ist und/oder dass die Kupplung (50) aus Kunststoff ausgebildet ist und/oder dass die Kupplung (50) werkzeuglos montierbar und/oder werkzeuglos demontierbar ist.

13. Kupplung nach einem der Ansprüche 8 bis 12, **dadurch gekennzeichnet, dass** eine Federstahlmanschette (30) vorgesehen ist, die die Kupplung (50) umgreift.

14. Bewegbar gelagertes Möbelteil (200) mit einer Synchronisationsvorrichtung (100) nach einem der Ansprüche 1 bis 7 und/oder einer Kupplung (50) nach einem der Ansprüche 8 bis 13.

15. Möbel (210) mit einem bewegbar gelagerten Möbelteil (200) nach Anspruch 14.

## Claims

1. A synchronising device (100) for a movably mounted furniture part (200), wherein the synchronising device (100) synchronises a movement between at least two adjusting devices (102, 103) by way of a synchronising rod (10), **characterised in that** the synchronising rod (101) has at least two shaft portions (10, 20), between which is arranged an overload protection device (1) which when a predetermined holding torque is exceeded between the two shaft portions (10, 20), enables a relative rotary movement between the two shaft portions (10, 20).

2. A synchronising device as set forth in claim 1 **characterised in that** the adjusting devices (102, 103) are in the form of drawer extension guides (110, 111) of a drawer (201) or adjusting drives (120) of a furniture flap (202) or in the form of a lockable and unlockable ejection device (130) for the movably mounted furniture part (200).

3. A synchronising device as set forth in claim 1 or claim 2 **characterised in that** the synchronising device (100) drives at least one respective gear (104) at left and right.

4. A synchronising device as set forth in claim 3 **characterised in that** at left and right the synchronising device (100) has racks (106) into which the gears (104) engage.

5. A synchronising device as set forth in one of claims 1 through 4 **characterised in that** the overload protection device (1) is provided axially or radially between the two shaft portions (10, 20).

6. A synchronising device as set forth in one of claims 1 through 5 **characterised in that** the overload protection device (1) has at least one radially or axially spring-loaded latching portion (2) which engages into at least one of the two shaft portions (10, 20) - preferably into both shaft portions (10, 20) - and latches into at least one of the two shaft portions (10, 20) - preferably into both shaft portions (10, 20).

7. A synchronising device as set forth in one of claims 1 through 6 **characterised in that** there is provided a spring steel sleeve (30) which embraces the overload protection device (1).

8. A coupling (50) for an overload protection device (1), in particular for a synchronising device (100) as set forth in one of claims 1 through 7, comprising a torque-transmitting shaft (51), wherein the overload protection device (1) is arranged between two shaft portions (10, 20) of the shaft (51), **characterised in that** mounted on a shaft portion (10, 20) is a resilient sleeve (3) carrying a latching portion (2) which latches into a counterpart latching means (21) of the other shaft portion (10, 20) and which is automatically unlatched when a predetermined holding torque is exceeded and enables a relative rotary movement between the two shaft portions (10, 20).

9. A coupling (50) as set forth in claim 8 **characterised in that** the two shaft portions (10, 20) fit into each other and the latching portion (2) of the resilient sleeve (3) passes through an opening (11) in the one shaft portion (10) and latches into the counterpart latching means (21) of the other shaft portion (20).

10. A coupling as set forth in one of claims 8 through 9 **characterised in that** the unlatched latching portion (2) of the resilient sleeve (3) automatically latches into the counterpart latching means (21) of the other shaft portion (20) again.

11. A coupling as set forth in one of claims 8 through 10 **characterised in that** the unlatched latching portion (2) of the resilient sleeve (3) remains during its unlatched condition in the opening (11) in the one shaft portion (10) and automatically latches into the counterpart latching means (21) of the other shaft portion (20) again.

12. A coupling as set forth in one of claims 8 through 11 **characterised in that** the coupling (50) is in one piece and/or the coupling (50) is made from plastic and/or the coupling (50) can be assembled and/or disassembled without a tool.

13. A coupling as set forth in one of claims 8 through 12 **characterised in that** there is provided a spring steel sleeve (30) which embraces the coupling (50).

14. A movably mounted furniture part (200) having a synchronising device (100) as set forth in one of claims 1 through 7 and/or a coupling (50) as set forth in one of claims 11 through 13.

15. An article of furniture (210) having a movably mounted furniture part (200) as set forth in claim 14.

## Revendications

1. Dispositif de synchronisation (100) pour un élément de meuble (200) logé de manière mobile, le dispositif de synchronisation (100) synchronise par une tige de synchronisation (101) un mouvement entre au moins deux dispositifs de réglage (102, 103), **caractérisé en ce que** la tige de synchronisation (101) présente au moins deux ondulations partielles (10, 20), entre lesquelles un dispositif de protection contre les surcharges (1) est agencé, lequel libère en cas de dépassement d'un couple de retenue prédéterminé entre les deux ondulations partielles (10, 20) un mouvement de rotation relatif entre les deux ondulations partielles (10, 20).

2. Dispositif de synchronisation selon la revendication 1, **caractérisé en ce que** les dispositifs de réglage (102, 103) sont réalisés comme des glissières (110, 111) d'un tiroir (201) ou comme des mécanismes de commande (120) d'un volet de meuble (202) ou comme un dispositif d'éjection ve rrouillable et déverrouillable (130) pour l'élément de meuble (200) logé de manière mobile.

3. Dispositif de synchronisation selon la revendication 1 ou 2, **caractérisé en ce que** le dispositif de synchronisation (100) entraîne à gauche et à droite respectivement au moins une roue dentée (104).

4. Dispositif de synchronisation selon la revendication 3, **caractérisé en ce que** le dispositif de synchronisation (100) présente à gauche et à droite des crémaillères (106), dans lesquelles (106) les roues dentées (104) s'engagent.

5. Dispositif de synchronisation selon l'une quelconque des revendications 1 à 4, **caractérisé en ce que** le dispositif de protection contre les surcharges (1) est réalisé axialement ou radialement entre les deux ondulations partielles (10, 20).

6. Dispositif de synchronisation selon l'une quelconque des revendications 1 à 5, **caractérisé en ce que** le dispositif de protection contre les surcharges (1) présente au moins un élément d'encliquetage (2) sollicité par ressorts radialement ou axialement qui s'engage dans au moins l'une des deux ondulations partielles (10, 20) - de préférence dans les deux ondulations partielles (10, 20) - et s'encliquète dans au moins l'une des deux ondulations partielles (10, 20) - de préférence dans les deux ondulations partielles (10, 20).

7. Dispositif de synchronisation selon l'une quelconque des revendications 1 à 6, **caractérisé en ce qu'**une manchette d'acier à ressorts (30) est prévue, laquelle (30) enveloppe le dispositif de protection contre les surcharges (1).

8. Couplage (50) pour un dispositif de protection contre les surcharges (1), en particulier pour un dispositif de synchronisation (100) selon l'une quelconque des revendications 1 à 7, avec une ondulation (51) transmettant un couple de rotation, le dispositif de protection contre les surcharges (1) étant agencé entre deux ondulations partielles (10, 20) de l'ondulation (51), **caractérisé en ce qu'**une manchette à ressorts (3) est logée sur une ondulation partielle (10, 20), laquelle (3) porte un élément d'encliquetage (2) qui s'encliquète dans un cran antagoniste (21) de l'autre ondulation partielle (10, 20) et se désengage automatiquement lors du dépassement d'un couple de retenue prédéterminé et libère un mouvement de rotation relatif entre les deux ondulations partielles (10, 20).

9. Couplage (50) selon la revendication 8, **caractérisé en ce que** les deux ondulations partielles (10, 20) s'enfichent l'une dans l'autre et l'élément d'encliquetage (2) de la manchette à ressorts (3) pénètre dans une ouverture (11) d'une ondulation partielle (10) et s'encliquète dans le cran antagoniste (21) de l'autre ondulation partielle (20).

10. Couplage selon la revendication 8 ou 9, **caractérisé en ce que** l'élément d'encliquetage (2) désengagé de la manchette à ressorts (3) s'encliquète de nouveau automatiquement dans le cran antagoniste (21) de l'autre ondulation partielle (20).

11. Couplage selon l'une quelconque des revendications 8 à 10, **caractérisé en ce que** l'élément d'encliquetage (2) désengagé de la manchette à ressorts (3) séjourne pendant son (2) état désengagé dans l'ouverture (11) d'une ondulation partielle (10) et s'encliquète de nouveau automatiquement dans le cran antagoniste (21) de l'autre ondulation partielle (20).

12. Couplage selon l'une quelconque des revendications 8 à 11, **caractérisé en ce que** le couplage (50) est réalisé d'un seul tenant et/ou **en ce que** le couplage (50) est réalisé en plastique et/ou **en ce que** le couplage (50) peut être monté sans outil et/ou peut être démonté sans outil.

13. Couplage selon l'une quelconque des revendications 8 à 12, **caractérisé en ce qu'**une manchette d'acier à ressorts (30) est prévue, laquelle enveloppe le couplage (50).

14. Elément de meuble (200) logé de manière mobile avec un dispositif de synchronisation (100) selon l'une quelconque des revendications 1 à 7 et/ou un couplage (50) selon l'une quelconque des revendications 8 à 13.

15. Meuble (210) avec un élément de meuble (200) logé de manière mobile selon la revendication 14.
